# EUROPEAN PATENT SPECIFICATION

(11) **EP 0 331 408 B1**
(45) Date of publication and mention of the grant of the patent: **04.01.1995**
(21) Application number: 89301946.3
(22) Date of filing: 27.02.1989
(51) Int. Cl.: C08L 23/20

(54) **But-1-ene molding resin blends**
Polybuten-1-Formmasse
Compositions de moulage à base de polybutène-1

(30) Priority: 29.02.1988 US 161872
(43) Date of publication of application: 06.09.1989
(73) Proprietor: SHELL OIL COMPANY, Houston Texas 77002 (US); MITSUI PETROCHEMICAL INDUSTRIES, LTD., Tokyo 100 (JP)
(72) Inventor: Hwo, Charles C., Sugar Land Texas 77478 (US); Hughes, Patrick M., Clinton, NJ 08809 (US)
(74) Representative: Cresswell, Thomas Anthony

(56) References cited:
- EP-A- 0 076 375
- FR-A- 2 147 999
- US-A- 4 554 321
- US-A- 4 645 792
- JOURNAL OF APPLIED POLYMER SCIENCE, vol. 24, no. 12, December 1979, pages 2333- 2345,John Wiley & Sons,Inc, New York, US; A. Siegmann: Crystalline/ cristalline polymer blends: some structure-property relationships.

## Description

This invention relates to compositions which contain a but-1-ene homopolymer and are suitable for use in the production of articles, particularly molded articles.

US-A-4 554 321 describes films and sheets formed from compositions comprising a homopolymer of but-1-ene and a copolymer of but-1-ene with ethylene. Having a low ether solubles content, these films and sheets are useful for food and medical packaging. EP-A-0 076 375 discloses blends of a copolymer of but-1-ene and ethylene with propylene and a high density polyethylene. These blends are formed into films and sheets which have heat sealing characteristics.

US-A-3 733 373 is directed to improving the usefulness of but-1-ene homo- or copolymers as molding resins. In molding these resins, the but-1-ene polymer crystallizes out of the melt as a soft, clear plastic (Form II polymer crystallization) and then gradually changes to the more thermodynamically stable Form I. It is stated that during this transformation the molded objects are tacky and warp and become cloudy, and that the molded object tends to be so soft that the knock-out pins of the mold tend to puncture the molded parts. The document discloses that the addition of high or medium density polyethylene substantially increases the crystallization temperature of the but-1-ene polymer and permits the blends to mold extremely well and to be released from the mold without being punctured or dented by the knock-out pins. A concentration range of from 0.1 to 30% by weight of ethylene polymer is disclosed as useful. The increase in crystallization point, measured by Differential Scanning Calorimetry (DSC) is used in the examples as a measure of effectiveness of the additive. However, the addition of polypropylene to the blends of the patent is not disclosed.

It has now been discovered that a composition comprising a blend of a but-1-ene homopolymer (PB), a stabilized propylene polymer (PP) and high density polyethylene may be used for the production of a molded article which has an excellent overall balance of properties including improved cycle time. This latter term means that a shorter time is required for molding after extrusion than for usual types of polymer blends.

Accordingly, the present invention provides a composition comprising a blend of 60 to 75% by weight of an isotactic but-1-ene homopolymer having a melt viscosity of 225 or less, from 25 to 35% by weight of stabilized propylene polymer, and from 0.02 to 1.5% by weight of high density polyethylene. The invention further provides molded articles prepared from these blends.

Typically, the compositions include a small but critical amount of a mold release agent to provide a material with an improved cycle time. The mold release agent is generally present in an amount of from 0.1 to 1% by weight. This can achieve a 20% improvement in the cycle time as compared with known compositions.

The term isotactic polybut-1-ene as used herein refers to a but-1-ene polymer comprising at least 95%, typically at least 97% and especially at least 98% by weight of isotactic portions. Useful in the present invention are isotactic polybutenes having a molecular weight of from 500,000-1,750,000, for example from 650,000-1,500,000 and especially from 750,000-1,400,000 as determined by solution viscosity in "Decalin" (decahydronaphthalene). Suitable polybutenes have a density of from 914 to 919 kg m⁻³, for example from 916 to 919 kg m⁻³ and especially from 917 to 919 kg m⁻³. The polybutenes suitably have melt indices from 0.1 to 225. But-1-ene polymers having melt indices of 0.40, 2, 4, 20, and 200 are considered particularly useful in the invention. The but-1-ene component melt index is determined by ASTM D1238 Condition E.

Suitable polybutenes can be obtained, for example, by the Ziegler-Natta low-pressure polymerization of but-1-ene e.g. by polymerizing but-1-ene with catalysts of TiC1₃ or TiC1₃.A1C1₃ and A1(C₂H₅)₂Cl at temperatures of from 10°-50°C, for example 20°-40°C. An example of such a process is described in DE-A-1,570,353. The polymer thus formed is suitably further processed in accordance with conventional methods, e.g. according to the processes of DE-A-1,292,379 and DE-A-1,570,337.

The composition of the invention comprises from 60-75% by weight of an isotactic but-1-ene homopolymer. In particular 65-70% by weight of the but-1-ene homopolymer is suitable and 68.5% by weight is especially preferred. The product PB0400, available from the Shell Chemical Co. of Houston, Texas, is a suitable component for use in the novel formulation.

The stabilized propylene polymer used in the blends of this invention is a propylene homopolymer or copolymer having a melt flow of less than 60, typically from 1 to 15, as measured by ASTM D1238, Condition L. Since the melt flow and molecular weight of propylene homopolymers and copolymers are inversely related, the corresponding molecular weight for a polymer with a given melt flow may be readily determined by routine experimentation. A suitable propylene has, for example, a melt flow of about 12, a weight average molecular weight (determined by gel permeation chromatography) of about 318,000 and a density of 903kg m⁻³.

A wide variety of suitable propylene polymers are commercially available having densities of at least 900kg m⁻³. Methods for the preparation of these polymers are well known in the art. A propylene polymer having a viscosity at mixing temperatures approaching that of the but-1-ene homopolymer is particularly suitable in order to facilitate mixing of the formulation. Mixing is accomplished, for example, by blending a but-1-ene homopolymer having a melt index of 20 with a 12 melt flow propylene homopolymer. "PP" refers to propylene polymers of the type described herein. The propylene polymer designated "5820" having a melt flow of 12, available from Shell Chemical Co. of Houston, Texas, is a suitable PP component for use in the novel formulation.

The propylene homopolymer is suitably stabilized. Examples of stabilizing agents include "Irganox" 1010, dimethyl thiopropionate, ionol, calcium stearate, and/or mixtures thereof.

The amount of propylene polymer blended with the but-1-ene homopolymer is critical to obtain an improved cycle time in the formulation. The compositions of the invention comprise from 25 to 35% by weight of the propylene polymer. 30% by weight is particularly suitable. This level of about 30% propylene polymer represents the level at which the compositions exhibit the best overall improved property balance.

The high density polyethylene (HDPE) employed in the novel formulations of this invention typically has a density above about 941kg m⁻³, for example at least 950kg m⁻³. An HDPE having a melt index of from 0.1 to 20, as measured by ASTM D1238, Condition E, is typically employed. HDPE with higher melt indices are also suitable since the melt index and molecular weight of HDPE are inversely related. The corresponding molecular weight for a particular HDPE with a given melt index may therefore be readily determined by routine experimentation. A particularly suitable HDPE has, for example, a melt index of 7.5 x 10⁻⁴g/s (0.45 g/10 min.), a weight average molecular weight of about 166,000 and a density of 950kg m⁻³. Other suitable HDPE have a density of 941kg m⁻³ or 945kg m⁻³. As stated above, a high density polyethylene having a viscosity at mixing temperatures approaching that of the but-1-ene homopolymer facilitates mixing of the components. A wide variety of suitable high density polyethylenes are commercially available and methods for their preparation are well known in the art. Commercially available HDPE may be prepared by polymerization processes employing Ziegler type coordination catalysts or supported chromium oxide catalysts. Commercially available HDPE of either type is suitable. The product "Alathon" 7815 is a preferred HDPE for use in the novel formulation.

The benefit of HDPE incorporation is apparently due to a crystal nucleating effect. Only very small amounts of HDPE are required to provide the desired beneficial effects and are generally in the range from 0.02 to 1.5% by weight. 0.1 to 1.2% by weight of HDPE, more particularly 1.0% by weight HDPE, can be used to obtain good results.

Further additives such as various mold release agents, conventional fillers, thermal and ultraviolet stabilizers, processing agents, slip agents, antiblock agents, nucleating agents, pigments and/or other additives may suitably be incorporated in the compositions of the invention before, during, or after the blending operation. The particular additives used will depend partly on the intended end-use of the composition. Mold release agents are suitably used in amounts from 0.1 to 1% by weight, for example from 0.3 to 0.7% by weight, particularly 0.5% by weight, in the novel formulations. Examples include silicone-based mold release agents such as "Dynamar" PPA-791. Alternatively, fluorosilicone-based mold release agents may be used.

The method of combining the PB, PP, HDPE and mold release agents significantly affects the properties of the resultant formulation. For commercial utility, it is desired to use the least amount of energy to combine the components into an effective blend. For example, the HDPE in a masterbatch is added to the major portion of PB prior to, or together with, the PP. Alternatively, the HDPE is incorporated in the PB before PP is added. For commercial practice, a masterbatch of HDPE and "Dynamar" PPA-791 in PB may be prepared in an intensive mixing device such as a twin-screw extruder and incorporated in PB by passing PB through an extruder coupled with a side-arm extruder through which the masterbatch is added. An alternative method is to employ an extruder provided with two side-arm extruders; the HDPE and "Dynamar" PPA-791 are injected through the first side-arm and PP is injected through the second side-arm extruder. Other intensive mixing devices, such as Banbury mixers, may be employed to make the masterbatch. It is important to avoid incorporation of HDPE and "Dynamar" PPA-791 in the PP, as would occur if a masterbatch of HDPE and "Dynamar" PPA-791 in PP were employed. This would also occur, at least in part, if HDPE, "Dynamar" PPA-791 and PP were added simultaneously through a single side-arm extruder.

After blending, the compositions of this invention are suitably formed on conventional manufacturing equipment, for example, blow molding equipment. The compositions can be formed into a variety of shapes with cross-sectional thicknesses (gauge) of, for example, about 5.08 x 10⁻⁴m to 7.62 x 10⁻³m (20 to 300 mils). Typical molded articles include garage door openers, spouts for inflatable bags, injection blow molded liquid containers or other types of containers. Other types of molded articles may be prepared.

Suitable methods for converting compositions of this invention into blow molded bottles are disclosed in US-A-4,354,004. The compositions can be processed on equipment designed for manufacture of polypropylene articles, substantially in the same manner as other commercially molded polymer articles.

The following Examples further illustrate the invention.

### EXAMPLES

### Example 1

A formulation was prepared comprising:
68.5% by weight of PB0400;
30.0% by weight of PP5820;
1.0% by weight of HDPE ("Alathon" 7815); and
0.5% by weight of a mold release agent ("Dynamar" PPA-791).

### Example 2

A formulation was prepared comprising:
68.5% by weight of PB0800 (WBS-608), an isotactic but-1-ene homopolymer having a melt index of 200, available from Shell Chemical Co. of Houston, Texas;
30.0% by weight of PP5820;
1.0% by weight of HDPE "Alathon" 7815; and
0.5% by weight of "Dynamar" PPA-791.

## Claims

1. A composition comprising a blend of from 60 to 75% by weight of an isotactic but-1-ene homopolymer having a melt index of 225 or less, from 25 to 35% by weight of a stabilized propylene polymer having a melt flow of less than 60, and from 0.02 to 1.5% by weight of high density polyethylene.

2. A composition according to Claim 1 comprising from 65 to 70% by weight of the isotactic but-1-ene homopolymer, from 25 to 35% by weight of the stabilised propylene poymer and from 0.1 to 1.2% by weight of the high density polyethylene.

3. A composition according to Claim 1 or 2 further comprising from 0.1 to 1% by weight of a mold release agent.

4. A composition according to Claim 3, wherein the mold release agent is silicone-based.

5. A composition according to Claim 3, wherein the mold release agent is fluorosilicone-based.

6. A composition according to any one of the preceding claims wherein the propylene polymer is stabilized with at least one of a hindered phenol, dimethylthiopropionate, ionol and calcium stearate.

7. A composition according to any one of the preceding claims, wherein the propylene polymer has a density of at least 900 kg m⁻³.

8. A composition according to any one of the preceding claims, wherein the polyethylene has a density of at least 941 kg m⁻³.

9. A process for preparing a composition as claimed in any one of Claims 1 to 8, which comprises blending the polyethylene with a masterbatch comprising the propylene polymer and the isotactic but-1-ene homopolymer.

10. A molded article prepared from a composition as claimed in any one of Claims 1 to 8.

## Patentansprüche

1. Masse umfassend eine Mischung aus 60 bis 75 Gew.-% eines isotaktischen 1-Butenhomopolymers mit einem Schmelzindex von 225 oder weniger, 25 bis 35 Gew-% eines stabilisierten Propylenpolymers mit einem Schmelzindex von weniger als 60 und 0,02 bis 1,54 Gew.-% Polyethylen hoher Dichte.

2. Masse nach Anspruch 1 umfassend 65 bis 70 Gew.-% des isotaktischen 1-Butenhomopolymers, 25 bis 35 Gew-% des stabilisierten Propylenpolymers und 0,1 bis 1,2 Gew.-% des Polyethylens hoher Dichte.

3. Masse nach Anspruch 1 oder 2 weiters umfassend 0,1 bis 1 Gew.-% eines Gleitmittels.

4. Masse nach Anspruch 3, worin das Gleitmittel auf Siliconbasis ist.

5. Masse nach Anspruch 3, worin das Gleitmittel auf Fluorsiliconbasis ist.

6. Masse nach einem der vorhergehenden Ansprüche, worin das Propylenpolymer mit mindestens einem gehemmten Phenol, Dimethylthiopropionat, Jonol und Calciumstearat stabilisiert ist.

7. Masse nach einem der vorhergehenden Ansprüche, worin das Propylenpolymer eine Dichte von mindestens 900 kg m⁻³ hat.

8. Masse nach einem der vorhergehenden Ansprüche, worin das Polyethylen eine Dichte von mindestens 941 kg m⁻³ hat.

9. Verfahren zur Herstellung einer Masse nach einem der Ansprüche 1 bis 8, welches das Vermischen des Polyethylens mit einer Muttermischung umfaßt, die das Propylenpolymer und das isotaktische 1-Butenhomopolymer enthält.

10. Formteil hergestellt aus einer wie in einem der Ansprüche 1 bis 8 beanspruchten Masse.

## Revendications

1. Composition comprenant un mélange de 60 à 75% en poids d'un homopolymère isotactique de butène-1, ayant un indice de fluidité à l'état fondu de 225 ou moins, de 25 à 35% en poids d'un polymère de propylène stabilisé, ayant un indice de fluidité à l'état fondu inférieur à 60, et de 0,02 à 1,5% en poids de polyéthylène haute densité.

2. Composition selon la revendication 1, comprenant de 65 à 70% en poids de l'homopolymère isotactique de butène-1, de 25 à 35% en poids du polymère de propylène stabilisé et de 0,1 à 1,2% en poids du polyéthylène haute densité.

3. Composition selon la revendication 1 ou 2, comprenant en outre de 0,1 à 1% en poids d'un agent de démoulage.

4. Composition selon la revendication 3, dans laquelle l'agent de démoulage est à base de silicone.

5. Composition selon la revendication 3, dans laquelle l'agent de démoulage est à base de fluorosilicone.

6. Composition selon l'une quelconque des revendications précédentes, pour laquelle le polymère de propylène est stabilisé à l'aide d'au moins un composé pris parmi les phénols à empêchement stérique, le thiopropionate de diméthyle, l'ionol et le stéarate de calcium.

7. Composition selon l'une quelconque des revendications précédentes, pour laquelle le polymère de propylène présente une masse volumique d'au moins 900 kg/m³.

8. Composition selon l'une quelconque des revendications précédentes, pour laquelle le polyéthylène présente une masse volumique d'au moins 941 kg/m³.

9. Procédé de préparation d'une composition telle que revendiquée dans l'une quelconque des revendications 1 à 8, qui comprend le mélange du polyéthylène avec un mélange mère comprenant le polymère de propylène et l'homopolymère isotactique de butène-1.

10. Article moulé, obtenu à partir d'une composition telle que revendiquée dans l'une quelconque des revendications 1 à 8.
